(19) **Europäisches Patentamt** / **European Patent Office** / **Office européen des brevets**

(11) **EP 2 978 322 B1**

(12) **EUROPEAN PATENT SPECIFICATION**

(45) Date of publication and mention
of the grant of the patent:
**21.05.2025 Bulletin 2025/21**

(21) Application number: **14748319.2**

(22) Date of filing: **28.03.2014**

(51) International Patent Classification (IPC):
**A23G 1/56** (2006.01)   **A23G 1/36** (2006.01)
**A23G 1/04** (2006.01)   **A23D 7/015** (2006.01)
**A23D 7/02** (2006.01)   **A23D 7/01** (2006.01)
**A23D 7/04** (2006.01)   **A23G 1/32** (2006.01)
**B01F 23/41** (2022.01)

(52) Cooperative Patent Classification (CPC):
**A23D 7/04; A23D 7/003; A23D 7/011; A23G 1/32;
A23G 1/36; A23G 1/56; B01F 23/4105;**
B01F 2215/0431; B01F 2215/0472;
B01F 2215/0481

(86) International application number:
**PCT/US2014/032140**

(87) International publication number:
**WO 2014/160920 (02.10.2014 Gazette 2014/40)**

(54) **PROCESS FOR THE PRODUCTION OF STABLE EMULSIONS**

VERFAHREN ZUR HERSTELLUNG VON STABILEN EMULSIONEN

PROCÉDÉ DE PRODUCTION D'ÉMULSIONS STABLES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.03.2013 EP 13001653**

(43) Date of publication of application:
**03.02.2016 Bulletin 2016/05**

(73) Proprietor: **Cargill, Incorporated
Wayzata, MN 55391 (US)**

(72) Inventors:
• **DI BARI, Vincenzo
Birmingham
West Midlands B29 7JS (GB)**
• **NORTON, Ian Timothy
Rushden
Northamptonshire NN10 0TN (GB)**
• **NORTON, Jennifer Elizabeth
Harborne Birmingham
West Midlands B17 0ES (GB)**

• **SMITH, Paul Raymond
B-1410 Waterloo (BE)**

(74) Representative: **Forresters IP LLP
Skygarden
Erika-Mann-Straße 11
80636 München (DE)**

(56) References cited:
WO-A1-2012/041523     US-A1- 2010 143 545
US-A1- 2012 052 180     US-A1- 2012 177 801
US-B1- 6 174 555

• NORTON J E ET AL: "Development and characterisation of tempered cocoa butter emulsions containing up to 60% water", JOURNAL OF FOOD ENGINEERING, BARKING, ESSEX, GB, vol. 95, no. 1, 1 November 2009 (2009-11-01), pages 172 - 178, XP026234399, ISSN: 0260-8774, [retrieved on 20090505], DOI: 10.1016/J.JFOODENG.2009.04.026

EP 2 978 322 B1

**Description**

FIELD OF THE INVENTION

The invention relates to a process for the production of cocoa butter emulsions and to a process for the production of a chocolate products incorporating such emulsions.

BACKGROUND OF THE INVENTION

Chocolate products are consumed in great quantities, particularly in Europe and North America. They contain significant amounts of both sugar and fat and are therefore rich in calories. Low calorie or reduced fat alternatives have been developed but are rarely successful. Indeed, consumers tend to treat chocolate as an indulgence, its appeal lying principally in its sensorial properties (such as taste, mouth-feel, snap and so on) rather than any nutritional benefit. And, unfortunately, low calorie and reduced fat products struggle to match the sensorial properties of their full-fat, full-calorie equivalents. It has thus been a long-time objective in the chocolate industry to develop chocolate products with a reduced fat and/or calorie content which, nonetheless, retain the sensorial properties of the original product.

One approach has involved reducing the fat content of chocolate products by replacing at least part of the fat by a water-in-oil emulsion. Unfortunately, the preparation of such water-containing chocolates has proved to be a very difficult task: technologies that are currently available tend to have a negative impact on taste, texture, processability, stability and/or shelf-life. Even when only adding small amounts of water, this causes severe rheological changes in the product, usually accompanied by lumping and/or granulation and a coarse unacceptable mouth-feel. The addition of larger quantities of water, usually in the form of fresh cream or full cream milk, results in the production of "ganache" which is conventionally used as a short shelf-life filling for truffles or as a topping for confections. Ganache is the confectioner's term for a phase-inverted (i.e. oil-in-water) chocolate preparation and has a softer eating texture than normal chocolate and does not have the sought-after snap of traditional chocolate when broken.

In more detail, US-A-5468509 describes a milk chocolate containing 1-16% water in which the chocolate preparation is produced by mixing cocoa butter with cocoa ingredients in the presence of an edible emulsifier, so that the ingredients are thoroughly coated with cocoa butter. The mixture is then blended with an aqueous phase prepared separately by mixing water, sweetener and milk solids to give a uniform mixture without resulting in high viscosity. The mixing is kept to a minimum speed to avoid exposing the cocoa solids in the cocoa butter to the water, whilst still producing a uniform mixture. If the cocoa solids in the cocoa butter were exposed to water, undesirable high viscosities such as gum formation and lumps of the mixed products as well as separation of the mixed products would result. Unfortunately, this slow mixing also results in an unstable product, with large water droplets, susceptible to phase separation, an undesirable mouth-feel and a much reduced shelf-life.

US2006/0121164 discloses chocolate products based on oil-in-water suspensions. These will inherently suffer from a number of drawbacks including reduced stability (compared to products based on water-in-oil emulsions), a dependency on structuring agents (to structure and sufficiently solidify the aqueous phase) and an undesirable texture and mouth-feel. In particular, it would be very difficult, if not impossible, to use the claimed technology to make chocolate products with a desirable "snap".

WO01/95737 discloses a water-in-oil emulsion prepared using equal parts of water and cocoa butter. The emulsion is mixed with standard dark chocolate (melted) to produce a water-containing dark chocolate. The dark chocolate can then be mixed with a fat suspension of milk powder to produce a water-containing milk chocolate. These products are not sweetened other than by the sugar content of the dark chocolate, resulting in a sugar reduction of up to 50%. This would lead to a considerable change in the final taste of the chocolate and, most likely, significantly reduce its consumer appeal.

US6174555 discloses water-containing soft coating chocolate products for use in ice-cream confectionery. To maintain a good texture even at the extreme temperatures of a frozen product, water-in-oil emulsions are produced with vegetable oils and then added to a melted chocolate product. Thus, the resulting product will in fact have a higher fat content, a poor "snap" at room temperature and, because of the vegetable oil content, could not be labeled as chocolate.

J.E. Norton et al. (Journal of Food Engineering, 95 (2009), 172-178) studies the characteristics of various cocoa butter based water-in-oil emulsions. They are prepared by blending cocoa butter and an emulsifier at approximately 60°C. An aqueous sugar solution is also heated to 60°C and added to the cocoa butter composition. The ingredients are then mixed with a high shear mixer, fitted with a fine emulsifier screen. This resulting pre-emulsion is pumped through a margarine line comprising a scraped surface heat exchanger (SSHE - or "A unit") and a pin stirrer (or "C unit"). The resulting compositions were fully emulsified, with no free water.

Nearly all experiments described in Norton are carried out with a 1% sugar solution, an aqueous phase of 21% and a fat content of 78%. These resulted in emulsions with water droplets of approximately 1 $\mu$m in diameter. Emulsions comprising 50% water are disclosed, but appear to be much less stable. Indeed, the increase in water content leads to a significant increase in the average water droplet size (with up to 73% of the droplets having a diameter of over 100 $\mu$m). What's more, Norton does not disclose the production of any chocolate products - and it is not clear how the emulsions could be used to produce stable products with a sufficiently high sugar content to achieve a good taste.

WO 2012/041523 discloses chocolate products comprising a water-in-oil emulsion. US2012052180 discloses an edible aerated water-in-oil emulsion comprising a fat phase; an emulsifier; and an aqueous phase along with methods of making such emulsions.

There is therefore still a need in the market for improved emulsion-based chocolate products with a reduced fat content and/or reduced calories. The present invention addresses this need.

## SUMMARY OF THE INVENTION

According to a first aspect of the present invention, there is provided a process for the production of a stable water-in-oil emulsion comprising a fat phase and an aqueous phase, wherein the process comprises: (a) a pre-mixing step, wherein the aqueous phase and fat phase are blended under low shear using a stirrer tip speed of less than 1.5 m/s; (b) a single high shear emulsification step wherein the aqueous phase and fat phase are mixed under high shear using a stirrer tip speed of at least 2 m/s in a scraped surface heat exchanger for up to 90 seconds, wherein the outlet temperature of the emulsion is 26-30°C; and (c) a cooling step to cool the emulsion to a temperature of 10-20°C, wherein the fat phase consists essentially of cocoa butter and one or more emulsifiers and wherein the emulsion obtained in step (b) is not subsequently subjected to any further high shear mixing using a stirrer tip speed of at least 2 m/s.

According to a yet further aspect of the present invention, there is provided a process for the manufacture of a chocolate product, characterized in that it comprises the step of mixing the above emulsion with a chocolate composition.

## FIGURES

**Figure 1:** Average droplets size as a function of SSHE rotor speed (NSSHE) for emulsions containing 10% (1a) and 20% (1b) aqueous phase.

**Figure 2:** Average droplets size as a function of SSHE rotor speed (NSSHE) for emulsions containing 10% (full diamonds) and 20% (crosses) aqueous phase.

**Figure 3:** DSC curves of emulsions containing 20% aqueous phase produced using the SSHE alone at four different rotor rates.

**Figure 4:** Average droplets size as a function of SSHE tip speed for emulsions containing 20% aqueous phase produced at different jacketing temperatures.

## DETAILED DESCRIPTION

The present invention provides a process for the production of a stable water-in-oil emulsion comprising a fat phase and an aqueous phase, wherein the process comprises: (a) a pre-mixing step, wherein the aqueous phase and fat phase are blended under low shear using a stirrer tip speed of less than 1.5 m/s; (b) a single high shear emulsification step wherein the aqueous phase and fat phase are mixed under high shear, using a stirrer tip speed of at least 2 m/s in a scraped surface heat exchanger for up to 90 seconds, wherein the outlet temperature of the emulsion is 26-30°C; and (c) a cooling step to cool the emulsion to a temperature of 10-20°C, wherein the fat phase consists essentially of cocoa butter and one or more emulsifiers and wherein the emulsion obtained in step (b) is not subsequently subjected to any further high shear mixing using a stirrer tip speed of at least 2 m/s.

The term **"stable"** as used herein refers to physical stability of the water-in-oil emulsion in that the water present in the emulsion does not seep out of the emulsion, thus that substantially no phase separation occurs. Preferably substantially no phase separation occurs over a period of at least 1 week, more preferably at least 2 weeks, even more preferably at least 3 weeks, even more preferably at least 1 month. The term stable can also refers to microbial stability of the water-in-oil emulsion of the present invention, thus to an increased shelf-life of the water-in-oil emulsion.

The term **"fat phase"** as used herein refers to any solid or liquid fat or oil, or mixture thereof, together with any ingredient that is miscible therein or has the ability to dissolve therein at ambient temperature. The fat phase consists essentially of cocoa butter and one or more emulsifiers.

Suitable emulsifiers are well known in the art and include, by way of illustration only, lecithin (such as soy lecithin), sugar esters, polyglycerol fatty acid esters, polyglycerol polyricinoleate (PGPR), and polysorbates (such as a polyoxyethylene sorbitan ester). Advantageously, the emulsifier will be PGPR. The emulsifier will preferably be present in an amount of up to 5% by weight (more preferably up to 2% most preferably up to 1%), based on the total weight of the fat phase.

The term **"aqueous phase"** as used herein refers to any aqueous composition, together with any solid or liquid ingredients which are miscible with water or that have the ability to dissolve in water at ambient temperature. For example, the aqueous phase may comprise a sugar (such as sucrose, glucose or fructose), a sweetener (such as polyols or high intensity sweeteners), a syrup (such as high fructose corn syrup, glucose syrup, agave syrup, honey, maple syrup or molasses), fruit juice, fruit purée, milk (e.g. skimmed, partially skimmed or whole milk, whether in its normal form, dehydrated or partially dehydrated form, in the form of a cream, or of a non-dairy milk product such as soy milk), infusions (such as tea, coffee, and other herbal or spice based infusions), liqueur (and other alcohol based liquids), and mixtures of two or more thereof. Alternatively, the aqueous phase may simply consist of water. Preferably, the aqueous phase will consist of water or of a solution of sugar(s) in water.

The aqueous phase may further comprise a **structuring agent.** A structuring agent will be understood to be an ingredient which is capable of binding and/or structuring water, e.g. to form an aqueous gel. Preferably, the structuring agent will be a hydrocolloid. Examples of hydrocolloids include both proteins and polysaccharides such as albumin, gelatin, carrageenan, pectin, gellan gum, guar gum, gum arabic, locust bean gum, sodium alginate, xanthan gum, carboxymethyl cellulose, starch and starch derivatives. Advantageously, the structuring agent will be carrageenan. When used, the structuring agent will preferably be present in an amount of 10% by weight, based on the total weight of the aqueous phase.

Other optional ingredients that may beneficially be incorporated into the aqueous phase include flavoring agents, nutraceuticals (such antioxidants, vitamins or minerals) and preservatives (such as sodium chloride).

According to the method of the present invention, the fat phase and aqueous phase are emulsified under **high shear.** High shear mixers for use in the preparation of emulsions are well known in the art. The mixer will have a stirrer tip speed of of at least 2 m/s and is a scraped surface heat exchanger (SSHE), e.g. of the kind typically found in a margarine line (such as the Schröder SSHE referred to in J.E. Norton et al. J. Food Engineering, 95 (2009), 172-178).

The outlet **temperature** of the emulsion is 26-30°C. This may mean, for example, that the high-shear mixer used for the emulsification step has a jacket temperature of 26-30°C. Emulsification will preferably be continued until the aqueous phase is fully dispersed throughout the fat phase, forming a fine, homogeneous emulsion. The fat phase and aqueous phase will be emulsified for up to 90 seconds.

Industrial emulsification processes, such as those used for the production of margarine, will typically involve two discreet high-sheer emulsification steps, as mentioned in the Background section, above: with the oil/water mixture passing first through a scraped surface heat exchanger (or "A unit") and then through a pin stirrer (or "C unit" - sometimes also referred to as the "B unit", especially in North America). It has surprisingly been found that the process of the present invention not only does not require the use of a second high shear emulsification step but actually benefits from omitting it. Thus, after the first high shear emulsification step, the process of the present invention will not include any further high shear mixing or emulsification steps. In particular, it will preferably not include subjecting the emulsion obtained in first high shear mixer to further emulsification and/or fluidification in a pin stirrer.

The process includes a **pre-mixing step,** prior to the high shear emulsification step. This pre-mixing step will be performed at low shear using a stirrer tip speed of less than 1.5 m/s. Equipment suitable for use in this pre-mixing step will be apparent to a person skilled in the art and may include, for example, any standard mixing vessels. On the lab scale, a simple magnetic stirrer can be used. The pre-mixing step will preferably be performed at a temperature which would allow for all the ingredients to become fully molten and to mix together properly. For example, it may be performed at a temperature of 50°C or more, more preferably at a temperature of 55°C or more, more preferably at a temperature of 60°C or more. For instance, it may be performed at about 65°C. The one or more emulsifiers will preferably be blended with the fat phase before the aqueous phase is added. Similarly, if a structuring agent is being used, it will preferably be added to the aqueous phase before addition of the aqueous phase to the fat phase. Preferably, the pre-mixing step will be performed until a coarse but homogeneous emulsion is obtained. For example, pre-mixing may last from 5 to 30 min, preferably from 5 to 20 min, more preferably for about 10 min. The pre-mix is then be transferred to the high shear mixer for emulsification, as described above.

The process of the invention further comprises a **cooling** step. Cooling may be achieved artificially (e.g. in a fridge, a cooling tunnel or a cooling cabinet) or simply by allowing the emulsion to set at room temperature. Preferably, cooling will be performed at a rate which allows proper crystal formation (including, in particular, proper sintering of the fat crystal shell at the interface between the fat phase and the aqueous phase). Preferably, the cooling rate will not exceed 1.2°C/min, more preferably it will not exceed 0.6°C/min. For example, cooling may advantageously be performed at about 0.3°C/min. Cooling will be performed to a target temperature of 10-20°C.

Emulsions obtained by the above process are also part of the present disclosure and will preferably be characterized by the aqueous phase being homogeneously dispersed throughout the fat phase in the form of **droplets.** Advantageously, the droplets will be substantially spherical. They will preferably have a surface weighted average droplet size (calculated in accordance with the methodology set out in the Examples below) of 20μm or less, more preferably of 20μm or less, more preferably of 15μm or less more preferably of 10μm or less, more preferably of 5μm or less, more preferably of 3μm or less. The droplets may have an average size as small as 1μm, 0.5μm or even 0.1μm. They may

further be defined by a fat-crystal shell at the interface between the aqueous phase and fat phase. Thus it is understood that the emulsification step (b) of the process of the present invention is preferably performed until an emulsion as described here before as part of the disclosure is obtained.

The fat phase of the emulsions of the present disclosure may be characterized by the presence of **fat crystals,** both at the interface of the fat phase with the aqueous phase and/or dispersed throughout the fat phase itself. Preferably, the fat phase will comprise fat crystals in the V ($\beta_2$) polymorphic form. At 20°C, for instance, the fat phase will preferably comprise more than 60%, more preferably more 70%, more preferably more than 75% fat crystals in the V($\beta_2$) polymorphic form.

The emulsion will preferably comprise up to 60% aqueous phase, preferably 5-50% aqueous phase, more preferably 10-40% aqueous phase, more preferably 15-30% aqueous phase by weight based on the total weight of the emulsion. Conversely, this means that the fat phase may account for as little as 40% by weight of the emulsion. Preferably, it will comprise 50-95%, more preferably 60-90%, more preferably 70-85% of the emulsion by weight.

The present disclosure also relates to **edible products** comprising the above emulsion. Edible products may include both food and beverage compositions. Preferably, the edible product will be a confectionery product. More preferably, it will be a chocolate product.

It has indeed been found that the emulsions of the present disclosure are particularly suited for the production of chocolate products. It was expected that it would be desirable to include two high shear emulsification step in the production of an emulsion for use in the production of chocolate products (with the first step being used to disperse the aqueous phase throughout the fat phase and to initiate the formation of crystal shells around the resulting aqueous droplets; and the second step then being used to break down any big crystals formed in the fat phase to produce a more fluid emulsion). It was thought that this would be critical to enable blending of the emulsion with additional ingredients such a cocoa powder. However, it has surprisingly been found that a less fluid emulsion, i.e. one which is subjected only to a single high shear emulsification step, performs better in the production of chocolate products than ones that undergo the typical two-step emulsification process.

The term **"chocolate product"** (or "chocolate") as used herein may refer to any type of chocolate mass (milk, dark or white chocolate, or chocolate crumb, for instance), chocolate coating, chocolate filling, soft chocolate chunks, chocolate compound, coating chocolates, chocolate tablets or bars, molded chocolate products, chocolate centers, pralines, chocolate shapes, chocolate chips, chocolate fillings, melting chocolates (e.g. for fondue), chocolate spread and so on, for use in any desirable applications (confectionary, bakery, chilled or frozen desserts such as ice-cream, etc). The term will not necessarily be limited to the strict legal definition of chocolate as defined according to any particular jurisdiction's food law regulations.

Preferably, the chocolate products of the present disclosure will comprise at least 1% aqueous phase by weight, more preferably at least 2% aqueous phase by weight, more preferably at least 5% aqueous phase by weight, more preferably at least 10% aqueous phase by weight. For example, the chocolate products of the present disclosure may comprise 1-20% aqueous phase by weight, 2-15% aqueous phase by weight, or 3-10% aqueous phase by weight. They may also comprise one or more additional ingredients such as flavoring agents (such as vanilla or vanillin), coloring agents, texturizing agents and/or one or more so-called inclusions such as nut products, fruit products and/or cereal products.

The chocolate products of the present disclosure will preferably be easy to mold and demold. That is, they will be sufficient fluid to pour into a mold, and will preferably slightly contract upon cooling such that can easily removed from the mold whilst retaining smooth and glossy in appearance. They will preferably be heat and/or bloom resistant. When subjected to even only relatively warm temperatures (i.e. in hot weather) chocolate products tend to lose their desired character and shape, to become soft, unsatisfactory and sticky to handle and to lose their gloss (due to leaching of their fat constituents and to both the fats and sugars recrystallising at the surface - known as "blooming"). In particular, if wrapped, the chocolate product will adhere to its packaging and its surface will be marred when the wrapper is removed. The chocolate products of the present disclosure will have more stable fat crystals and a higher melting point and will therefore be more resistant to blooming and/or to heat. In particular, they will retain their shape at higher temperatures than an equivalent water-free chocolate product (i.e. a "traditional" chocolate product comprising the same ingredients as the product of the disclosure except that it does not comprise an aqueous phase). The chocolate products of the disclosure will preferably be stable with good shelf-life. In particular, the aqueous phase will not leach out of the product, even after extended storage, and will not be susceptible of microbial growth. The products of the disclosure will preferably have a taste, texture and mouth-feel which is similar to an equivalent water-free chocolate product. They will also preferably have a reduced fat and/or calorie content, by virtue of the fact that at least a certain proportion of the normal fat content has been replaced with an aqueous phase.

Chocolate products of the present disclosure can be produced using standard chocolate **manufacturing techniques,** substituting the above emulsion for all or part of the normal fat content. The invention also relates to a process for the manufacture of a chocolate product, characterized in that it comprises producing a stable water-in-oil emulsion comprising a fat phase and an aqueous phase according to a process as defined in the claims and mixing said emulsion with a chocolate composition.

The term **"chocolate composition"** as used herein may refer to any composition selected from the group consisting of: cocoa powder, chocolate powder, cocoa liquor, chocolate and mixtures of two or more thereof. The cocoa powder may be of any type (i.e. of any fat content, any origin and treated in any way). Chocolate powder will be understood to be a mixture of cocoa powder (as above), sugar and, optionally, milk solids. It may be used as a simple powder blend, in the form of agglomerates or in any other form. Cocoa liquor will take its normal meaning in the art, being the product of grinding cocoa nibs (whether or not they are treated in any other way). The term "chocolate" may refer to any type of chocolate product as defined above, provided that it is in a form that is miscible with the emulsion. For example, it may be in the form of flakes or shavings that will melt on contact with a warm emulsion. Alternatively, it will be provided in a pre-molten form (e.g. at 30-50°C, preferably at about 40°C). Or it may be in the form of a liquid chocolate product (e.g. produced with high olein fats).

Preferably, when the chocolate composition is in a liquid form (e.g. in the form of a cocoa liquor or molten chocolate), under the mixing conditions - and in particular at the mixing temperature - it will have a similar viscosity to the emulsion. Preferably, it will have a **viscosity** $V_c$ which is from $1/3V_e$ to $3V_e$ (where $V_e$ = viscosity of the emulsion). More preferably, it will have a viscosity $V_c$ which is from $1/2V_e$ to $2V_e$. More preferably, it will have a viscosity $V_c$ which is from $1/1.5V_e$ to $1.5V_e$. More preferably, it will have a viscosity $V_c$ which is approximately equal to $V_e$.

Preferably, the emulsion and the chocolate composition will be mixed in a weight ratio of 1:1 to 1:2. They will preferably be mixed at low shear, e.g. at a stirrer tip speed of less than 1.5m/s, more preferably at a stirrer tip speed of 0.6 m/s or less. Preferably, the emulsion and chocolate composition will be mixed at a temperature in the range of 30-50°C. To achieve these temperatures, the mixing vessel may be heated and/or the process may include an initial heating step wherein the emulsion and/or chocolate composition are pre-heated to the target temperature.

Advantageously, further ingredients may also be incorporated into the chocolate product of the disclosure. They may be pre-mixed with the emulsion or the chocolate composition prior to mixing of these two components. Alternatively, they may be added during mixing of the emulsion and chocolate composition. Alternatively, they may be incorporated after the emulsion and chocolate composition have been fully mixed.

An example of such a further ingredient includes crystal seeds. These may be pre-mixed with either the emulsion or chocolate composition or they may be added during mixing of the emulsion and chocolate composition. They will advantageously be selected from the group consisting of crystals in the type V polymorphic form, crystals in the type VI polymorphic form and mixtures thereof (e.g. Mycryo cocoa butter, Barry Callebaut, Lebeke-Wieze, Belgium).

Other optional ingredients may include, but are not limited to, additional sweeteners (either natural or artificial), additional milk solids, additional emulsifiers, and any of the flavoring agents, coloring agents, texturizing agents, nutraceuticals and/or inclusions as described above.

The process of the present invention may also include one or more tempering steps. Tempering is a process which is well known in the art and which uses temperature cycling (heat decreases and increases) to ensure optimum crystal formation. Advantageously however, tempering can be avoided as the emulsions will already comprise the necessary crystal seeds to develop a desirable texture and mouth-feel.

The process may further comprise a cooling step, during which the chocolate product will preferably solidify. This can be achieved by artificial cooling (e.g. in a fridge, a cooling tunnel or a cooling cabinet) or by simply allowing the product to set at room temperature. Preferably, cooling will be performed at a rate which allows proper crystal formation, as for the emulsions above. Preferably, the cooling rate will not exceed 1.2°C/min, more preferably it will not exceed 0.6°C/min. For example, cooling may advantageously be performed at about 0.3°C/min. Cooling will be continued until a target temperature of 10-20°C is reached.

The products of the present disclosure (or obtained by the method of the present invention) may include, as noted above, chocolate mass (milk, dark or white), chocolate coating, chocolate filling, soft chocolate chunks, chocolate spreads and so on. They may be used, just like any other chocolate products, in any number of applications. They may, for instance, be shaped or moulded (e.g. for producing chocolate bars, chocolate tablets or moulded chocolate shapes). They may be packaged and used as such (e.g. as a chocolate paste, spread or dipping). Alternatively, they may be included as a component of another product. For instance, they may be used in confectionary products (e.g. as a coating or shell or as a filling or ganache for pralines, truffles and the like), in bakery products (e.g. as chocolate chunks, flakes or drops for biscuits, cookies or cakes), or in chilled or frozen desserts (e.g. as coatings or as inclusions for ice-cream).

These and other aspects of the present invention will now be further described with reference to the following, non-limiting examples. Any examples falling outside the scope of the claims are provided for comparative purposes only.

EXAMPLES

• Ingredients

Cocoa butter and PGPR (both from Cargill, Incorporated) were used without any further purification. The aqueous phase was prepared by dissolving analytical grade sodium chloride (Fisher Scientific, UK) in double distilled water to a final concentration of 0.02 M.

• Methods

All the dispersions were produced according to two formulations, differing in the aqueous phase volume fraction (10% wt and 20% wt) and containing the same amount of PGPR (1% wt overall).

### Pre-mix preparation

For each sample, 400 g of pre-mix were prepared. Using a hotplate stirrer (Stuart, UK), cocoa butter was firstly heated for two hours at about 65 °C ($\pm$ 5.0 °C). Weighted amounts of molten cocoa butter were added to PGPR in an 800 mL beaker. To ensure homogeneous distribution of the emulsifier in the whole volume, the mixture was stirred using a magnetic stirrer on a hotplate (Stuart, UK), while the temperature was slowly decreased to approximately 50 °C ($\pm$ 1.0 °C). Then, the aqueous phase, heated approximately the same temperature as the lipid phase, was added. The blending was carried out for about ten minutes using an overhead "lab egg" stirrer (IKA® RW 11, Sigma-Aldrich, UK) and a magnetic stir bar until the coarse emulsion appeared to be creamy and homogeneous (judged by eye). During the premixing stage and emulsification, the evaporation of water from the feeding vessel was avoided by covering it with aluminium foil.

### The margarine line

Water-in-cocoa butter emulsions were produced using a bench scale margarine line (technical specifications can be found in Norton et al. (2009; 2012)). This device is a continuous emulsification apparatus consisting of two stainless steel mixers in series: a scraped surface heat exchanger (SSHE, but commonly called an "A unit") followed by a pin stirrer (PS, also known as a "C unit").

### Overall set up for emulsions production

The pre-emulsion was pumped through the margarine line using a peristaltic pump (Masterflex L/S Digital Pump System with Easy-Load II Pump Head, Cole-Parmer, UK) through one meter long silicon pipeline (inner diameter of 3.2 mm; SLS, UK). The same pipes were used to connect each unit to a water bath (Julabo, UK) providing a constant countercurrent jacket flow. The jacketing temperature was set at 25 °C and 35 °C, for the SSHE and the PS, respectively. T-junctions, attached at the inlet and outlet of both the units, were used to monitor the temperature, using a Data Logger Thermometer (omega, UK) fitted with K-type thermocouple ($\pm$0.2% accuracy). The SSHE inlet temperature was kept at 40 °C ($\pm$ 0.5 °C), i.e., very close to the starting crystallising point of cocoa butter. The SSHE and PS outlet temperatures were 26.0 °C ($\pm$ 0.5 °C) and 33.5 °C ($\pm$ 0.5 °C), respectively, while the temperature at the SSHE outlet and PS inlet was the same.

For both units, four levels of rotor speed were chosen. In Table 1 the rotor speed and the corresponding tip speed provided by each mixer is referred. Twelve shearing combinations were investigated in details.

Table 1: Values of rotor (N) and tip speed used during emulsification for the SSHE and PS.

| SSHE rotor speed (rpm), NSSHE | SSHE tip speed (m/s) | PS rotor speed (rpm), NPS | PS tip speed (m/s) |
|---|---|---|---|
| 170 | 0.3 | 170 | 0.3 |
| 490 | 0.8 | 500 | 1.0 |
| 930 | 1.5 | 920 | 1.8 |
| 1315 | 2.1 | 1345 | 2.6 |

The flow rate was set at 30 mL/s (although the effect of a 60 mL/s flow rate was also studied), having an average residence time of 56 s and 320 s for the SSHE and PS, respectively. The final emulsions were collected in 40 mL sample pots and cooled using a rate of 0.6 °C/min before being analysed. Samples for thermal analysis were collected and the impact of two additional post-emulsification cooling rates (0.3 °C/min, 1.2 °C/min) was also investigated.

### Droplet size measurements

For all of the samples, droplet size analysis was performed with a pulsed field gradient (PFG) NMR (Minispec, Bruker Optics, UK), operating at 0.47 T (20 MHz for H1) with a water droplets size application. This method of measuring droplet size has been reviewed and is thought to be suitable for emulsions characterisation (Johns, 2009, van Duynhoven et al., 2002). The algorithm of this application assumes that droplet size distribution follows a log-normal distribution and that droplets are all spherical in shape. However, the water structured into inclusions exceeding a d3,3 value of 50 $\mu$m, is generally classified as "free water", and thus excluded from the calculations and expressed as a proportion.

A metal plunger with an inner diameter of 7.0 mm was used to obtain cylindrical shaped samples of approximately 10 mm in height. These were then transferred into a 10 mm NMR tubes and inserted into the probe head of the device at 5 °C. The surface weighted average droplet size (d3,2) was calculated using the equation provided by van Duyhoven et al. (2002):

$$d_{3,2} = d_{3,3} \cdot e^{-0.5\sigma^2}.$$

For each sample the d3,2 and "free water" values are the mean of at least three repetitions.

• Results and Discussion

**Effect of SSHE shear on the final average droplets size**

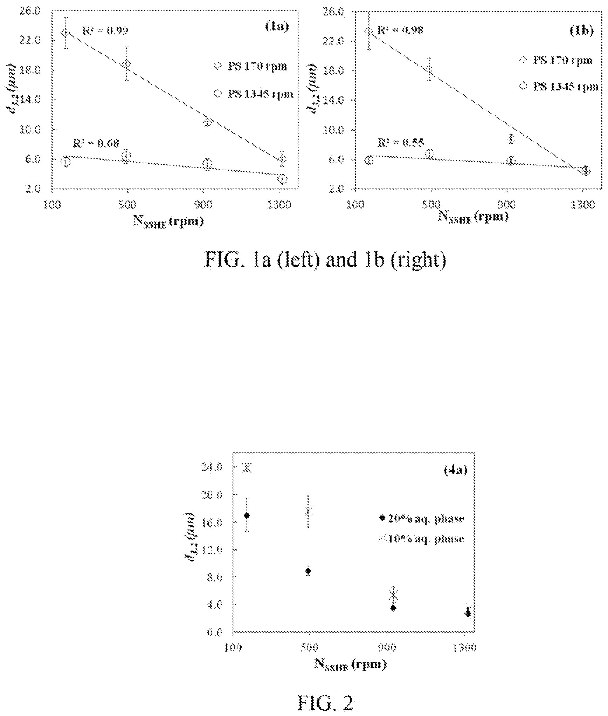

Results showed high dependence of droplets Sauter mean diameter (d3,2) on the shear profile applied in the SSHE. In Figures 1a and 1b, the values of droplets size are plotted as a function of the SSHE rotation speed for emulsions containing 10% and 20% aqueous phase, respectively. When the PS is at its minimum speed, the aqueous phase droplets size decrease as the SSHE rotation rate increases, with the d3,2 values decreasing from 23.0 $\mu$m to 6.1 $\mu$m (Fig. 1a), or from 23.4 $\mu$m to 4.8 $\mu$m (see Fig. 1b). However, when the PS is rotating at its highest speed, an increase in the SSHE rotor rate results in a small decrease in droplet size. Nevertheless, emulsions containing 20% aqueous phase made when the SSHE is at its top speed have the smallest average diameter regardless of the PS. A similar trend is observed for emulsions containing 10% dispersed phase. Therefore, it seems that it is the SSHE that plays the major role in determining final droplet size.

**Use of the SSHE on its own to produce emulsions**

To complete the picture regarding the role played by each mixer on emulsification, emulsions were produced using the SSHE on its own, using the same formulations and shearing conditions as described above. Figure 2 shows the average droplets size as a function of NSSHE (= speed of rotation (per minute) in SSHE).

To quantify the effect of each mixer on the final d3,2 value, the change in droplet size as a function of processing was calculated by using equation 1:

$$\left( \frac{d3,2SSHE\&PS - d3,2SSHE}{d3,2SSHE\&PS} \right) * 100\% \qquad (1)$$

Where d3,2SSHE&PS and d3,2SSHE are the average d3,2 value of emulsions produced using the whole margarine line and SSHE only, respectively. Table 2 shows the change in droplet size for emulsions containing 10 and 20% aqueous phase produced using the four NSSHE levels in combination with a PS rotating either at 170 or 1345 rpm.

When the PS is at its minimum rate, the shear provided by this mixer mostly produces a positive and significant ($\geq$ +25%) change in size meaning that a considerable increase of the average droplets diameter occurs. On the other side, when the NPS was set at 1345 rpm, the factor of size reduction was highly negative for values of NSSHE below 500 rpm while the trend changed for NSSHE over 900 rpm.

Table 2: The difference in droplets size (given as a percentage) between emulsions (containing 10 or 20% aqueous phase) produced with the whole margarine line (using two PS rotor speeds - expressed as "NPS") and with the SSHE alone (using four rotor speeds) is referred. According to equation 1, a positive value denotes an increase in droplet size as a result of using the PS, whilst a negative value denotes a decrease.

| | 10% aq. phase | | 20% aq. Phase | |
|---|---|---|---|---|
| NSSHE (rpm) | NPS 170 rpm | NPS 1345 rpm | NPS 170 rpm | NPS 1345 rpm |
| 170 rpm | -4% | -320% | +27% | -187% |
| 490 rpm | +7% | -170% | +51% | -31% |
| 930 rpm | +50% | -1% | +60% | +40% |

(continued)

|  | 10% aq. phase | | 20% aq. Phase | |
|---|---|---|---|---|
| NSSHE (rpm) | NPS 170 rpm | NPS 1345 rpm | NPS 170 rpm | NPS 1345 rpm |
| 1315 rpm | +45% | 0% | +44% | +41% |

The results seem to suggest that an independent emulsifying process may occur for each mixer, and that the overall impact on the final droplets size depends upon the rate at which the stirrers are reciprocally rotating. When low shear is applied in the SSHE, the droplets produced are large enough to be either easily coalesced or further broken in the PS. However, when the SSHE is rotating at a rate higher that 900 rpm, a process based on only this mixer produces the emulsions with the smallest average diameter. Therefore, under these conditions, the PS does not help in reducing the final average droplets size.

**Effect of residence time on average droplets size**

The effect of residence time was considered by increasing the flow rate to 60 mL/min. The measured values of residence time for the SSHE and PS were 28 s and 165 s, respectively. Table 4 refers the combinations of shearing tested and the corresponding values of d3,2 for a formulation containing 20% aqueous phase. For those emulsions produced using both the mixers, no difference in average droplets size was observed. When the SSHE only was used and rotating at its top rotor speed, an increase in the d3,2 value was observed for the shorter residence time. This seems to confirm that the PS reduces the average droplets size when an emulsion with large droplets is produced in the SSHE.

Table 3: d3,2 values (standard deviation given in brackets) as a function of SSHE and PS rotor speed for emulsions containing 20% water experiencing different time length of shearing.

|  | d3,2 | |
|---|---|---|
| Shearing conditions | 30 mL/min | 60 mL/min |
| NSSHE 170 rpm, NPS 1350 rpm | 5.9 ($\pm$ 0.4) | 5.1 ($\pm$ 0.5) |
| NSSHE 1315 rpm, NPS 170 rpm | 4.8 ($\pm$ 0.3) | 5.6 ($\pm$ 0.4) |
| NSSHE 1315 rpm, NPS 1350 rpm | 4.5 ($\pm$ 0.4) | 5.1 ($\pm$ 0.4) |
| NSSHE 170 rpm | 17.1 ($\pm$ 2.4) | 15.0 ($\pm$ 1.5) |
| NSSHE 1315 rpm | 2.7 ($\pm$ 0.3) | 5.1 ($\pm$ 0.3) |

**Impact of the post-emulsification cooling rate on the final droplet size**

The post-emulsification cooling rate was thought to play an important role in determining the final average droplet size. In fact, a fast cooling of the emulsions may not allow proper sintering of the fat crystal shell at the interface, thus damaging the droplets. The effect of three different cooling rates, 0.6 °C/min (used as reference for all of the experiments), 0.3 °C/min, and 1.2 °C/min was considered. No difference in droplet size was observed (Table 4). Differences may be observed when using faster cooling, such as using liquid nitrogen (although not studied here).

Table 4: d3,2 values (standard deviation given in brackets) as a function of SSHE and PS rotor speed for emulsions containing 20% water experiencing different post-emulsification cooling rate.

|  | d3.2 | | |
|---|---|---|---|
| Shearing conditions | 0.6 °C/min | 0.3 °C/min | 1.2 °C/min |
| NSSHE 170 rpm, NPS 1345 rpm | 5.9 $\pm$ 0.4 | 5.8 $\pm$ 0.2 | 5.5 $\pm$ 0.4 |
| NSSHE 1315 rpm, NPS 170 rpm | 4.8 $\pm$ 0.3 | 4.3 $\pm$ 0.6 | 4.4 $\pm$ 0.5 |
| NSSHE 1315 rpm, NPS 1345 rpm | 4.5 $\pm$ 0.4 | 4.3 $\pm$ 0.3 | 4.4 $\pm$ 0.3 |
| NSSHE 170 rpm | 17.1 $\pm$ 2.4 | 16.3 $\pm$ 1.5 | 16.8 $\pm$ 2.1 |
| NSSHE 1315 rpm | 2.7 $\pm$ 0.3 | 3.1 $\pm$ 0.5 | 2.9 $\pm$ 0.6 |

**Effect of Shearing conditions on emulsions thermal properties**

DSC thermographs were used to assess the effect of the process on the continuous phase. Due to the peak overlapping, the temperatures at the maxima of the endotherms were used as the peak temperature (Loisel et al., 1998).

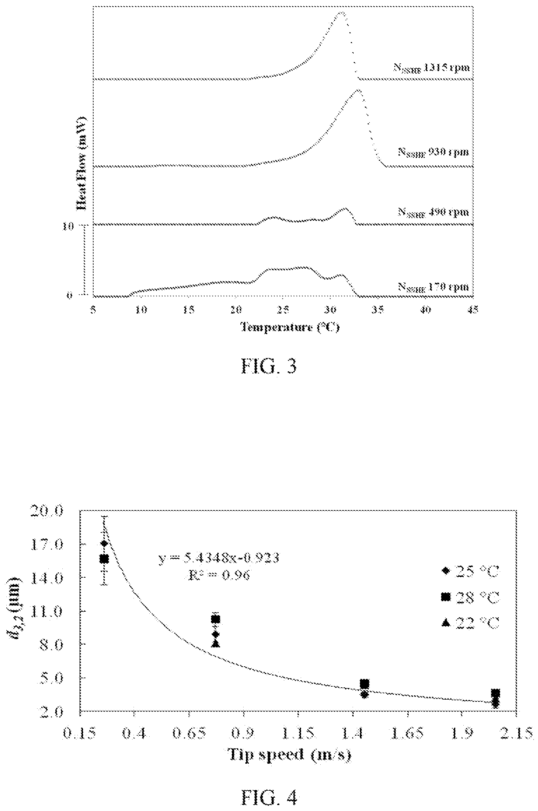

Results showed that the melting profile of the emulsions was directly influenced by the shearing conditions. Table 5 refers the shear profile used to produce the emulsions in relation to the number of peaks and their values in temperature (with the corresponding polymorphic forms). The values observed matched with data in literature for cocoa butter (Wille and Lutton, 1966), although constantly higher in agreement with Loisel et al. (1998). All of the samples showed the presence of a peak corresponding to the V form, even if in some thermographs it was only a small bump. The emulsions made using the whole margarine line had a more complex profile, which reflected the effect of the shear provided by the two units. Figure 3 shows the endotherms of emulsions containing 20% aqueous phase produced using only the SSHE. An increase in the NSSHE produced a shift toward the more stable polymorph, until a single sharp peak was obtained. Therefore, we could conclude that when the SSHE is providing high shear, it can be used as a continuous tempering-emulsifying device. All the emulsions, independently from the storing conditions, showed a single peak at 32 °C after 48 hours. These data were unsurprising as transitions toward the most stable polymorphic form are thermodynamically favourable and become faster in the presence of crystals in the V form. Within one month of observation, no transition to the VI form was observed.

Table 5: Melting properties of emulsions containing 20% aqueous phase.

| Shearing conditions | Number of peaks | Peak values (°C) | Polymorphic form |
|---|---|---|---|
| NSSHE 170 rpm, NPS 1345 rpm | 3 | 23; 29; 33 | II, IV, V |
| NSSHE 490 rpm, NPS 170 rpm | 3 | 22; 29; 32 | II, IV, V |
| NSSHE 930 rpm, NPS 1345 rpm | 2 | 23; 33 | II, V |
| NSSHE 1315 rpm, NPS 1345 rpm | 3 | 22; 29; 33 | II, IV, V |
| NSSHE 170 rpm | 3 | 23; 28; 32 | II, IV, V |
| NSSHE 490 rpm | 3 | 23; 28; 32 | II, IV, V |
| NSSHE 930 rpm | 1 | 33 | V |
| NSSHE 1315 rpm | 1 | 32 | V |

**Effect of Temperatures-Shear rates combinations on the microstructure**

Since the SSHE showed to be a good emulsifying-tempering device on its own, further study was carried out using only this mixer. In particular, the effect of temperature-shear combinations on emulsion physical properties was investigated. The adopted shear rates were the same as before while two more jacketing temperatures (22 and 28°C) were evaluated. The aqueous phase volume fraction was set at 20% (wt%). Figure 4 refers the $d_{3,2}$ values as a function of the tip speed of the SSHE. In this range of temperatures, both the average Sauter diameter and the polymorphic behaviour of cocoa butter were mainly determined by the shearing conditions. In fact, emulsions produced using a jacketing temperature of 22°C or of 28°C were characterised by the same droplets size and polymorphic forms as the ones made at 25°C.

**Claims**

1.    A process for the production of a stable water-in-oil emulsion comprising a fat phase and an aqueous phase, wherein the process comprises:

   a) a pre-mixing step, wherein the aqueous phase and the fat phase are blended under low shear using a stirrer tip speed of less than 1.5 m/s;
   b) a single high shear emulsification step wherein the aqueous phase and the fat phase are mixed using a stirrer tip speed of at least 2 m/s in a scraped surface heat exchanger for up to 90 seconds, wherein the outlet temperature of the emulsion is 26-30°C; and
   c) a cooling step to cool the emulsion to a temperature of 10-20°C,

   wherein the fat phase consists essentially of cocoa butter and one or more emulsifiers and wherein the emulsion obtained in step b) is not subsequently subjected to any further high shear mixing using a stirrer tip speed of at least 2 m/s.

2. A process according to any one of the preceding claims, **characterized in that** it comprises the step of mixing the emulsifier in with the aqueous phase and fat phase, preferably in step (a).

3. A process according to any one of claims 1 or 2, wherein the cooling step (c) occurs at a cooling rate that does not exceed 1.2 °C/min, preferably at a cooling rate that does not exceed 0.6 °C/min.

4. A process according to any one of the preceding claims, **characterized in that** the emulsion comprises up to 60% aqueous phase by weight based on the total weight of the emulsion and at least 40% fat phase by weight based on the total weight of the emulsion.

5. A process according to claim 4, **characterized in that** the emulsion comprises 10-40% aqueous phase by weight based on the total weight of the emulsion and 60-90% fat phase by weight based on the total weight of the emulsion.

6. A process according to any one of the preceding claims, **characterized in that** the aqueous phase is homogeneously dispersed throughout the fat phase in the form of droplets.

7. A process for the manufacture of a chocolate product, **characterized in that** it comprises producing a stable water-in-oil emulsion comprising a fat phase and an aqueous phase according to the process of any one of claims 1 to 6 and mixing said emulsion with a chocolate composition.

8. A process according to claim 7, **characterized in that** the chocolate composition is selected from the group consisting of: cocoa powder, chocolate powder, cocoa liquor, chocolate, and mixtures of two or more thereof.

9. A process according to claim 7 or 8, **characterized in that** the emulsion and chocolate composition are mixed at a stirrer tip speed of 0.6m/s or less.

**Patentansprüche**

1. Verfahren für die Erzeugung einer stabilen Wasser-in-Öl-Emulsion, umfassend eine Fettphase und eine wässrige Phase, wobei das Verfahren umfasst:

   a) einen Vormischschritt, bei dem die wässrige Phase und die Fettphase unter geringer Scherung unter Verwendung einer Rührwerksumfangsgeschwindigkeit von weniger als 1,5 m/s vermischt werden;
   b) einen einzelnen Emulgierungsschritt mit hoher Scherung, wobei die wässrige Phase und die Fettphase in einem Schabewärmetauscher bis zu 90 Sekunden lang unter Verwendung einer Rührwerksumfangsgeschwindigkeit von mindestens 2 m/s gemischt werden, wobei die Austrittstemperatur der Emulsion 26-30 °C beträgt; und
   c) einen Abkühlschritt, um die Emulsion auf eine Temperatur von 10-20 °C abzukühlen,

   wobei die Fettphase im Wesentlichen aus Kakaobutter und einem oder mehreren Emulgatoren besteht und wobei die in Schritt b) erhaltene Emulsion anschließend keinem weiteren Hochschermischen unter Verwendung einer Rührwerksumfangsgeschwindigkeit von mindestens 2 m/s unterzogen wird.

2. Verfahren nach einem der vorstehenden Ansprüche, **dadurch gekennzeichnet, dass** es den Schritt des Einmischens des Emulgators in die wässrige Phase und Fettphase umfasst, vorzugsweise in Schritt (a).

3. Verfahren nach einem der Ansprüche 1 oder 2, wobei der Abkühlschritt (c) mit einer Abkühlrate erfolgt, die 1,2 °C/min nicht übersteigt, vorzugsweise mit einer Abkühlrate, die 0,6 °C/min nicht übersteigt.

4. Verfahren nach einem der vorstehenden Ansprüche, **dadurch gekennzeichnet, dass** die Emulsion bis zu 60 Gew.-% die wässrige Phase, bezogen auf das Gesamtgewicht der Emulsion, und mindestens zu 40 Gew.-% die Fettphase umfasst, bezogen auf das Gesamtgewicht der Emulsion.

**5.** Verfahren nach Anspruch 4, **dadurch gekennzeichnet, dass** die Emulsion zu 10-40 Gew.-% die wässrige Phase, bezogen auf das Gesamtgewicht der Emulsion, und zu 60-90 Gew.-% die Fettphase umfasst, bezogen auf das Gesamtgewicht der Emulsion.

**6.** Verfahren nach einem der vorstehenden Ansprüche, **dadurch gekennzeichnet, dass** die wässrige Phase in der gesamten Fettphase in Form von Tröpfchen homogen verteilt ist.

**7.** Verfahren für die Manufaktur eines Schokoladenerzeugnisses, **dadurch gekennzeichnet, dass** es das Erzeugen einer stabilen Wasser-in-Öl-Emulsion umfasst, umfassend eine Fettphase und eine wässrige Phase gemäß dem Verfahren nach einem der Ansprüche 1 bis 6 und das Mischen der Emulsion mit einer Schokoladenzusammensetzung.

**8.** Verfahren nach Anspruch 7, **dadurch gekennzeichnet, dass** die Schokoladenzusammensetzung aus der Gruppe ausgewählt ist, bestehend aus: Kakaopulver, Schokoladenpulver, Kakaomasse, Schokolade und Mischungen aus zwei oder mehr davon.

**9.** Verfahren nach Anspruch 7 oder 8, **dadurch gekennzeichnet, dass** die Emulsion und die Schokoladenzusammensetzung bei einer Rührwerksumfangsgeschwindigkeit von 0,6 m/s oder weniger gemischt werden.

**Revendications**

**1.** Procédé destiné à la production d'une émulsion eau-dans-huile stable comprenant une phase grasse et une phase aqueuse, dans lequel le procédé comprend :

a) une étape de prémélange, dans lequel la phase aqueuse et la phase grasse sont combinées sous faible cisaillement à l'aide d'une vitesse périphérique d'agitateur inférieure à 1,5 m/s ;
b) une unique étape d'émulsification à haut cisaillement dans lequel la phase aqueuse et la phase grasse sont mélangées à l'aide d'une vitesse périphérique d'agitateur d'au moins 2 m/s dans un échangeur thermique à surface raclée pendant jusqu'à 90 secondes, dans lequel la température de sortie de l'émulsion va de 26 à 30 °C ; et
c) une étape de refroidissement pour refroidir l'émulsion à une température de 10 à 20 °C,

dans lequel la phase grasse est constituée sensiblement de beurre de cacao et d'un ou plusieurs émulsifiants et dans lequel l'émulsion obtenue à l'étape b) n'est pas soumise par la suite à l'un quelconque mélange sous haut cisaillement supplémentaire à l'aide d'une vitesse périphérique d'agitateur d'au moins 2 m/s.

**2.** Procédé selon l'une quelconque des revendications précédentes, **caractérisé en ce qu'il** comprend l'étape de mélange de l'émulsifiant avec la phase aqueuse et la phase grasse, de préférence à l'étape (a).

**3.** Procédé selon l'une quelconque des revendications 1 ou 2, dans lequel l'étape de refroidissement (c) se produit à une vitesse de refroidissement qui ne dépasse pas 1,2 °C/min, de préférence à une vitesse de refroidissement qui ne dépasse pas 0,6 °C/min.

**4.** Procédé selon l'une quelconque des revendications précédentes, **caractérisé en ce que** l'émulsion comprend jusqu'à 60 % de phase aqueuse en poids en fonction du poids total de l'émulsion et au moins 40 % de phase grasse en poids en fonction du poids total de l'émulsion.

**5.** Procédé selon la revendication 4, **caractérisé en ce que** l'émulsion comprend 10 à 40 % de phase aqueuse en poids en fonction du poids total de l'émulsion et 60 à 90 % de phase grasse en poids en fonction du poids total de l'émulsion.

**6.** Procédé selon l'une quelconque des revendications précédentes, **caractérisé en ce que** la phase aqueuse est homogènement dispersée sur l'ensemble de la phase grasse sous la forme de gouttelettes.

**7.** Procédé destiné à la fabrication d'un produit de chocolat,

**caractérisé en ce qu'il** comprend la production d'une émulsion eau-dans-huile stable comprenant une phase grasse et une phase aqueuse conformément au procédé selon l'une quelconque des revendications 1 à 6 et le mélange de ladite émulsion avec une composition de chocolat.

8. Procédé selon la revendication 7, **caractérisé en ce que** la composition de chocolat est choisie dans le groupe constitué par : poudre de cacao, poudre de chocolat, liqueur de cacao, chocolat, et mélanges de deux de ceux-ci ou plus.

9. Procédé selon la revendication 7 ou 8, **caractérisé en ce que** l'émulsion et la composition de chocolat sont mélangées à une vitesse périphérique d'agitateur de 0,6 m/s ou moins.

FIG. 1a (left) and 1b (right)

FIG. 2

FIG. 3

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5468509 A
- US 20060121164 A
- WO 0195737 A
- US 6174555 B
- WO 2012041523 A
- US 2012052180 A

**Non-patent literature cited in the description**

- **J.E. NORTON et al.** *Journal of Food Engineering*, 2009, vol. 95, 172-178
- **J.E. NORTON et al.** *J. Food Engineering*, 2009, vol. 95, 172-178